# EUROPÄISCHE PATENTANMELDUNG

(11) **EP 1 020 986 A1**
(43) Veröffentlichungstag der Anmeldung: **19.07.2000**
(21) Anmeldenummer: 99119169.3
(22) Anmeldetag: 06.10.1999
(51) Int. Cl.: H02P 7/63, H02M 5/45, B60L 11/18, B60L 3/00, H02H 7/12

(54) **Verfahren zum Betreiben eines elektrischen Umrichters**

(30) Priorität: 15.01.1999 DE 19901272
(71) Anmelder: Alstom Anlagen und Antriebssysteme GmbH, 12277 Berlin (DE)
(72) Erfinder: Schütt, Hartmut, 12109 Berlin (DE); Giesselbach, Peter, 13403 Berlin (DE)
(74) Vertreter: Dreiss, Fuhlendorf, Steimle & Becker, Patentanwälte

(57) **Zusammenfassung**

Es wird ein Verfahren zum Betreiben eines elektrischen Umrichters (6) beschrieben, der zwei Teilumrichter (1, 2) aufweist. Bei dem Verfahren wird eine Fehlfunktion des Betriebs des Umrichters (6) erkannt. Nach einer erkannten Fehlfunktion wird ermittelt, ob der Betrieb eines der beiden Teilumrichter (1, 2) fortgesetzt werden kann. Falls dies der Fall ist, wird der Betrieb des einen Teilumrichters (1) fortgesetzt und der Betrieb des anderen Teilumrichters (2) wird beendet. Auf diese Weise wird die Verfügbarkeit des Umrichters (6) erhöht.

## Beschreibung

Die Erfindung betrifft ein Verfahren zum Betreiben eines elektrischen Umrichters, der zwei Teilumrichter aufweist, wobei eine Fehlfunktion des Betriebs des Umrichters erkannt wird. Die Erfindung betrifft ebenfalls ein entsprechendes Steuergerät und einen entsprechenden elektrischen Umrichter.

Es ist bekannt, beispielsweise zum Betrieb eines elektrischen Motors einen Frequenzumrichter zu verwenden. Es ist auch bekannt, z.B. zur Verdoppelung der Leistung des Motors die Anzahl der Stränge bzw. Wicklungen des Umrichters entsprechend zu verdoppeln. Damit wird gleichzeitig auch eine Verminderung der Welligkeit der am Wellenstrang auftretenden Momente erreicht. Weiterhin ist bekannt, daß ein derartiger, beispielsweise 6-strängiger Umrichter aufgeteilt werden kann in zwei voneinander unabhängige 3-strängige Teilumrichter.

Ein derartiger, zwei Teilumrichter aufweisender elektrischer Umrichter ist mit einem Steuergerät gekoppelt, das unter anderem dazu vorgesehen ist, eine Fehlfunktion des Umrichters zu erkennen. Bei dem bekannten Verfahren wird der elektrische Umrichter und damit auch der elektrische Motor nach der Erkennung einer derartigen Fehlfunktion abgeschaltet.

Aufgabe der Erfindung ist es, ein Verfahren zum Betreiben eines elektrischen Umrichters sowie ein entsprechendes Steuergerät und einen entsprechenden elektrischen Umrichter zu schaffen, die eine größere Verfügbarkeit des Umrichters und damit des Motors ermöglichen.

Diese Aufgabe wird bei einem Verfahren der eingangs genannten Art, wie auch bei einem Steuergerät und einem elektrischen Umrichter der eingangs genannten Art durch die Erfindung vorteilhafterweise dadurch gelöst, daß nach einer erkannten Fehlfunktion ermittelt wird, ob der Betrieb eines der beiden Teilumrichter fortgesetzt werden kann, und daß - falls dies der Fall ist - der Betrieb des einen Teilumrichters fortgesetzt und der Betrieb des anderen Teilumrichters beendet wird.

Die Erfindung ermöglicht somit einen Notbetrieb des Umrichters und damit des Motors. Nach einer erkannten Fehlfunktion des Umrichters geht der Umrichter erfindungsgemäß in den Notbetrieb über, in dem der Motor zumindest in einem eingeschränkten Umfang, insbesondere mit einer geringeren Last, weiterbetrieben werden kann. Die Verfügbarkeit des Umrichters und damit des Motors wird auf diese Weise wesentlich erhöht.

Besonders vorteilhaft ist es, wenn der Betrieb des einen Teilumrichters automatisch insbesondere unterbrechungsfrei fortgesetzt wird.

Bei einer vorteilhaften Weiterbildung der Erfindung wird - falls der Betrieb keines der beiden Teilumrichter fortgesetzt werden kann - der Betrieb beider Teilumrichter beendet. In diesem Fall ist kein Notbetrieb möglich und der Umrichter und damit auch der Motor werden abgeschaltet.

Besonders vorteilhaft ist es, wenn - falls der Betrieb eines der beiden Teilumrichter fortgesetzt werden kann - die Fehlfunktion des Betriebs des anderen Teilumrichters angezeigt wird. Damit ist es einem Betreiber des Umrichters bzw. des Motors möglich, trotz der - eingeschränkten - Fortsetzung des Betriebs des Umrichters zu erkennen, daß der Betrieb des Umrichters eine Fehlfunktion aufweist. Der Betreiber kann daraufhin beispielsweise auf beiden Seiten des fehlerhaften Teilumrichters vorhandene Trenner öffnen, um damit den Teilumrichter für eine Reperatur unter anderem von dem Motor abzutrennen. Die Reperatur des fehlerhaften Teilumrichters kann dann ohne eine Unterbrechung des Betriebs des fehlerfreien Teilumrichters erfolgen, wodurch die Verfügbarkeit des Umrichters und damit des Motors weiter verbessert wird.

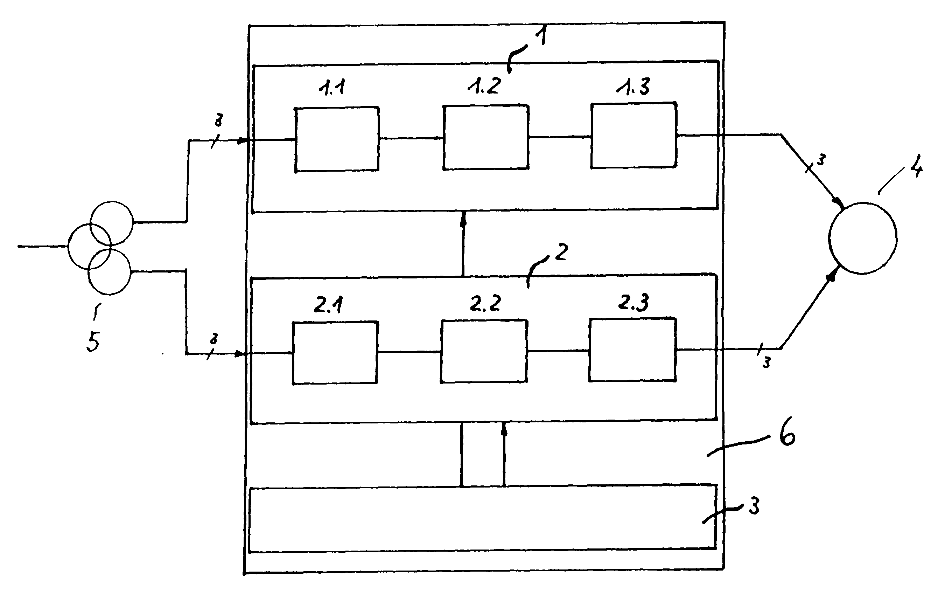

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die einzige Figur der Zeichnung zeigt ein schematisches Blockschaltbild eines Ausführungsbeispiels eines erfindungsgemäßen elektrischen Umrichters.

In der Figur ist ein elektrischer Umrichter 6 dargestellt, der zur Ansteuerung eines 6-phasigen Wechselstrom-Motors 4 vorgesehen ist. Der Umrichter 6 weist einen ersten Teilumrichter 1 und einen zweiten Teilumrichter 2 auf, die unabhängig und autark voneinander angeordnet und ausgebildet sind. Ebenfalls weist der Umrichter 6 ein Steuergerät 3 auf, das mit den beiden Teilumrichtern 1, 2 elektrisch gekoppelt ist, und das zur Steuerung und/oder Regelung der beiden Teilumrichter 1, 2 vorgesehen ist.

Bei den beiden Teilumrichtern 1, 2 handelt es sich um 3-strangige Teilumrichter. Die beiden Teilumrichter 1, 2 sind jeweils mit einem Gleichrichter 1.1, 2.1, mit einem Stromzwischenkreis 1.2, 2.2 sowie mit einem Wechselrichter 1.3, 2.3 versehen.

Die beiden Teilumrichter 1, 2 sind dreiphasig mit einem Transformator 5 verbunden und werden von diesem mit einer Spannung bzw. einem Strom gespeist. Der Transformator 5 ist dabei zur Speisung der beiden Teilumrichter 1, 2 entsprechend mit zwei um 30 Grad versetzten Systemen ausgestaltet.

Das Steuergerät 3 ist dazu geeignet, eine Fehlfunktion des Betriebs des Umrichters 6 zu erkennen. Zu diesem Zweck kann das Steuergerät 3 gegebenenfalls mit Sensoren, beispielsweise mit den Teilumrichtern 1, 2 zugeordneten Sensoren versehen sein.

Wird von dem Steuergerät 3 eine derartige Fehlfunktion erkannt, so wird daraufhin von dem Steuergerät 3 ermittelt, ob der Betrieb von zumindest einem der beiden Teilumrichter 1, 2 fortgesetzt werden kann. Diese Ermittlung kann auf der Grundlage der erkannten Fehlfunktion selbst und/oder auf der Grundlage weiterer bzw. anderer, dem Steuergerät 3 vorliegender Informationen erfolgen.

Kommt das Steuergerät 3 zu dem Ergebnis, daß der Betrieb eines der beiden Teilumrichter 1, 2 fortgesetzt werden kann, so wird der Betrieb dieses einen Teilumrichters, z.B. des Teilumrichters 1 ohne Unterbrechung fortgesetzt, während der Betrieb des anderen Teilumrichters, z.B. des Teilumrichters 2 beendet wird.

Dies stellt einen automatischen Notbetrieb des Umrichters 6 dar, mit dem erreicht wird, daß der Motor 4 trotz der erkannten Fehlfunktion des Umrichters 6 zumindest in einem eingeschränkten Umfang, insbesondere mit einer geringeren Last, weiterbetrieben werden kann. Die Verfügbarkeit des Umrichters 6 und damit des Motors 4 wird dadurch erhöht.

In dem vorstehenden Fall kann durch das Steuergerät 3 die Fehlfunktion des anderen Teilumrichters, z.B. des Teilumrichters 2 optisch und/oder akustisch angezeigt werden.

Bei einer nicht-dargestellten Ausführungsform der Erfindung ist es möglich, daß beispielsweise motorbetriebene Trenner an den Ein- und Ausgängen der beiden Teilumrichter 1, 2 vorgesehen sind. Damit kann der fehlerhafte Teilumrichter, also z.B. der Teilumrichter 2, galvanisch von dem Transformator 5 und von dem Motor 4 abgetrennt werden. Dies ermöglicht es, daß der fehlerhafte Teilumrichter 2 ohne eine Unterbrechung des Betriebs des fehlerfreien Teilumrichters 1 wieder repariert werden kann. Damit wird die Verfügbarkeit des Umrichters 6 und damit des Motors 4 weiter erhöht.

Kommt das Steuergerät 3 hingegen zu dem Ergebnis, daß der Betrieb keines der beiden Teilumrichter 1, 2 fortgesetzt werden kann, so wird der Betrieb beider Teilumrichter 1, 2 beendet. In diesem Fall ist kein Notbetrieb möglich und der Motor 4 wird zusammen mit den Teilumrichtern 1, 2 abgeschaltet.

In dem letztgenannten Fall können beide Teilumrichter 1, 2 mittels der erwähnten Trenner von dem Transformator 5 und dem Motor 4 abgetrennt und repariert werden.

## Patentansprüche

1. Verfahren zum Betreiben eines elektrischen Umrichters (6), der zwei Teilumrichter (1, 2) aufweist, wobei eine Fehlfunktion des Betriebs des Umrichters (6) erkannt wird, **dadurch gekennzeichnet**, daß nach einer erkannten Fehlfunktion ermittelt wird, ob der Betrieb eines der beiden Teilumrichter (1, 2) fortgesetzt werden kann, und daß - falls dies der Fall ist - der Betrieb des einen Teilumrichters (1) fortgesetzt und der Betrieb des anderen Teilumrichters (2) beendet wird.

2. Steuergerät (3) für einen elektrischen Umrichter (6), der zwei Teilumrichter (1, 2) aufweist, wobei durch das Steuergerät (3) eine Fehlfunktion des Betriebs des Umrichters (6) erkennbar ist, dadurch gekennzeichnet, daß durch das Steuergerät (3) nach einer erkannten Fehlfunktion ermittelbar ist, ob der Betrieb eines der beiden Teilumrichter (1, 2) fortgesetzt werden kann, und daß - falls dies der Fall ist - der Betrieb des einen Teilumrichters (1) fortgesetzt und der Betrieb des anderen Teilumrichters (2) beendet wird.

3. Elektrischer Umrichter (6), der zwei Teilumrichter (1, 2) aufweist, die mit einem Steuergerät (3) gekoppelt, mit dem eine Fehlfunktion des Betriebs des Umrichters (6) erkennbar ist, dadurch gekennzeichnet, daß durch das Steuergerät (3) nach einer erkannten Fehlfunktion ermittelbar ist, ob der Betrieb eines der beiden Teilumrichter (1, 2) fortgesetzt werden kann, und daß - falls dies der Fall ist - der Betrieb des einen Teilumrichters (1) fortgesetzt und der Betrieb des anderen Teilumrichters (2) beendet wird.

4. Verfahren oder Steuergerät (3) oder Umrichter (6) nach einem der vorstehenden Ansprüche, dadurch gekennzeichnet, daß - falls der Betrieb keines der beiden Teilumrichter fortgesetzt werden kann - der Betrieb beider Teilumrichter (1, 2) beendet wird.

5. Verfahren oder Steuergerät (3) oder Umrichter (6) nach einem der vorstehenden Ansprüche, dadurch gekennzeichnet, daß - falls der Betrieb eines der beiden Teilumrichter fortgesetzt werden kann - die Fehlfunktion des Betriebs des anderen Teilumrichters (2) angezeigt wird.
